# EUROPEAN PATENT APPLICATION

(11) **EP 2 990 241 A1**
(43) Date of publication of application: **02.03.2016**
(21) Application number: 14306330.3
(22) Date of filing: 29.08.2014
(51) Int. Cl.: B60G 15/06, F16C 19/10

(54) **Strut bearing unit, motor vehicle equipped with such a strut bearing unit and manufacturing method**

(71) Applicant: Aktiebolaget SKF, 415 50 Göteborg (SE)
(72) Inventor: Bussit, Sylvain, 37380 MONNAIE (FR); Vidot, Désiré, 37510 BALLAN MIRE (FR); Soudee, Jean-Marc, 37170 CHAMBRAY LES TOURS (FR); De Lemps, François, 37540 SAINT CYR SUR LOIRE (FR)
(74) Representative: Myon, Gérard Jean-Pierre

(57) **Abstract**

The invention concerns a strut bearing unit (10), comprising a bearing (20), a lower cup (30) and an upper cup (40), the lower cup (30) comprising a tubular axial portion (31) and an annular outward radial portion (32), characterized in that the lower cup (30) includes two stiffening inserts (70, 80) which are distinct from each other, with a first insert (70) comprising at least an axial portion (71) located within the axial portion (31) of the lower cup (30), and a second insert (80) comprising at least a radial portion (82) located within the outward radial portion (32) of the lower cup (30). The invention also concerns a motor vehicle equipped with such a strut bearing unit (10) and a method for manufacturing such a strut bearing unit (10).

## Description

### TECHNICAL FIELD OF THE INVENTION

The invention concerns a strut bearing unit. The invention also concerns a motor vehicle equipped with such a strut bearing unit. The invention also concerns a method for manufacturing such a strut bearing unit. The field of the invention is that of suspension systems, particularly for motor vehicles.

### BACKGROUND OF THE INVENTION

In a known manner, a suspension system comprises a strut supporting an axle and a wheel of a vehicle. A strut bearing unit is placed in the top portion of the strut, opposite to the wheel and the ground, between a suspension spring and an upper member secured to the body of the vehicle. The spring is placed around a damper piston rod of which the end may be secured to the body of the vehicle.

WO-A-2011/070117 discloses an example of a strut bearing unit, comprising a rolling bearing, a lower cup and an upper cup. The strut bearing unit is configured for transmitting axial and radial loads between a suspension spring, a bumper and the body of the vehicle, while allowing a relative angular movement between the races of the rolling bearing. The lower cup includes a metal stiffening insert to have a high enough rigidity and to allow an adequate transmission of axial and radial loads.

Usually, the lower cup can be made of a metallic material or a synthetic material, for example polyamide PA66 with 30 or 50% glass fiber, and reinforced with a metal stiffening insert. However, for specific applications with extremely severe load conditions, the rigidity of such a lower cup may be insufficient.

### SUMMARY OF THE INVENTION

The aim of the invention is to provide an improved strut bearing unit.

To this end, the invention concerns a strut bearing unit, comprising a bearing, a lower cup and an upper cup, the lower cup comprising a tubular axial portion and an annular outward radial portion. According to the invention, the lower cup includes two stiffening inserts which are distinct from each other, with a first insert comprising at least an axial portion located within the axial portion of the lower cup, and a second insert comprising at least a radial portion located within the outward radial portion of the lower cup.

Thanks to the invention, the lower cup integrating two stiffening inserts can withstand severe loads. These inserts are positioned to protect specific areas of the lower cup. These inserts need less material and have a reduced weight in comparison to one unique insert protecting the same areas.

According to further aspects of the invention which are advantageous but not compulsory, such a strut bearing unit may incorporate one or several of the following features:
- The outermost diameter of the first insert is equal to the innermost diameter of the second insert.
- Among the two stiffening inserts, only the second insert extends within the outward radial portion of the lower cup.
- The lower cup further comprises an inward radial portion and the first insert comprises an axial portion located within the axial portion of the lower cup and an inward radial portion located within the inward radial portion of the lower cup.
- The first insert comprises an outward radial portion located within the axial portion of the lower cup.
- The second insert comprises a frustoconical inner portion extending between the outward radial portion and the axial portion of the lower cup.
- Except their innermost bores, the two stiffening inserts are devoid of through holes.
- The two stiffening inserts are made of metal, while the lower cup is made of synthetic material.
- The bearing is a rolling bearing.
- The strut bearing unit comprises several bearings located between the lower cup and the upper cup.

Preferably, the two stiffening inserts are manufactured from one unique stamped metal sheet. Thus, instead of having separate stamping tools for each insert, it is possible to have common stamping tools for both inserts and their manufacturing costs are reduced. Moreover, since the interior of the outer insert is used to manufacture the inner insert (or in other words, the exterior of the inner insert is used to manufacture the outer insert), material can be saved and manufacturing costs are further reduced.

These inserts can be manufactured in one stamping operation.

Alternately, the two stiffening inserts are manufactured from two different stamped metal sheets.

The invention also concerns a motor vehicle, equipped with a strut bearing unit as mentioned here-above.

The invention also concerns a method for manufacturing a strut bearing unit as mentioned here-above, wherein the two stiffening inserts are manufactured from one unique stamped metal sheet. The method includes the following successive steps:
a) a step of stamping one unique metal sheet to form at least one axial portion and at least one radial portion ;
b) a step of cutting the metal sheet to get the two stiffening inserts, with the first insert comprising at least the axial portion and the second insert comprising at least the radial portion ;
c) a step of overmolding the lower cup onto the two stiffening inserts, with the axial portion of the first insert being located within the axial portion of the lower cup and the radial portion of the second insert being located within the outward radial portion of the lower cup ;
d) a step of assembling the strut bearing unit.

Preferably, the step of stamping a) is performed in one unique stamping operation. In other words, the metal sheet is stamped in one unique operation.

### BRIEF DESCRIPTION OF THE DRAWINGS

The invention will now be explained in correspondence with the annexed figures, and as an illustrative example, without restricting the object of the invention. In the annexed figures:
- figure 1 is a perspective view of a lower cup of a strut bearing unit according to the invention ;
- figure 2 is a view along arrow II on figure 1 ;
- figure 3 is a partial sectional view along line III-III on figure 2, showing half the lower cup and two stiffening inserts integrated in the lower cup ;
- figure 4 is a sectional view along line IV-IV on figure 2, at a larger scale, showing the strut bearing unit according to the invention, comprising the lower up, an upper cup and a bearing ;
- figure 5 is a perspective view of the inner insert;
- figure 6 is an axial sectional view of the insert of figure 5
- figure 7 is a perspective view, with another scale, of the outer insert; and
- figure 8 is an axial sectional view of the insert of figure 7.

### DETAILED DESCRIPTION OF SOME EMBODIMENTS

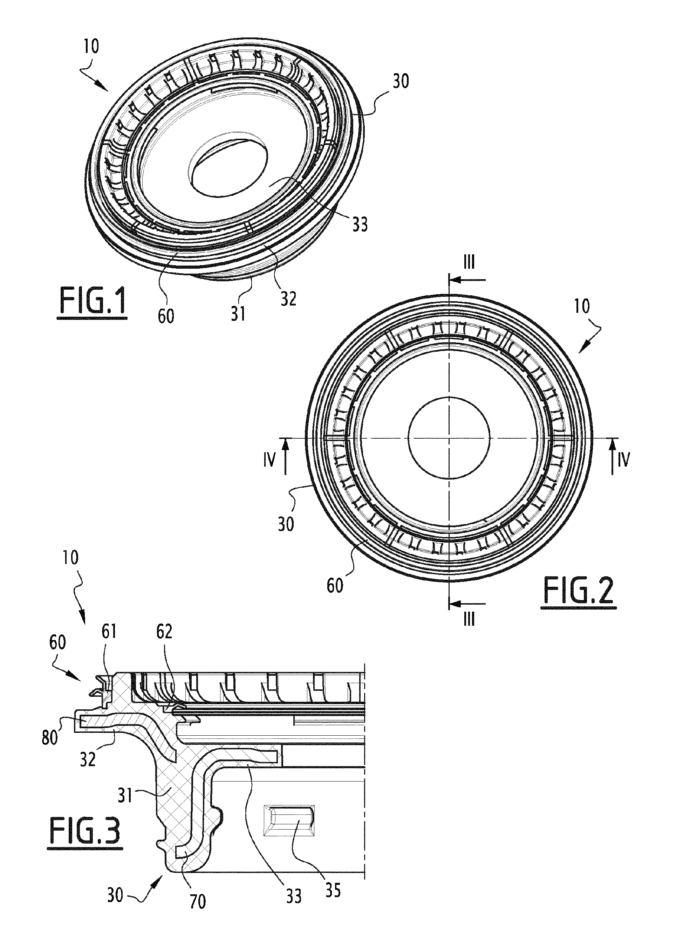

Figures 1 to 8 show a strut bearing unit 10 according to the invention and its constitutive elements.

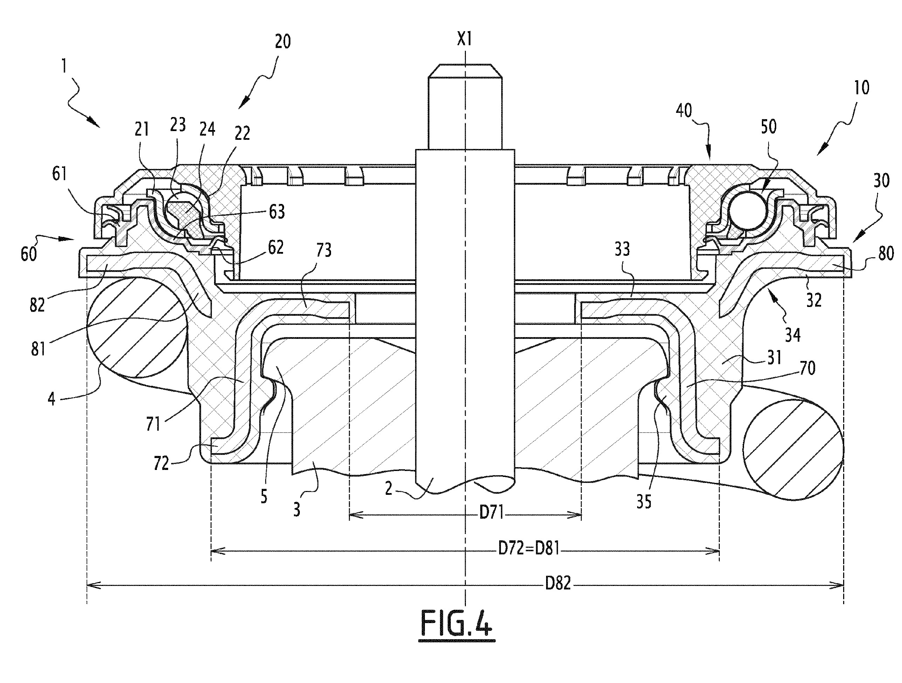

Unit 10 is configured to equip a strut 1, partially shown on figure 4, of a motor-vehicle suspension system.

Strut 1 supports an axle and a wheel of a vehicle, not shown for simplification purposes. Strut 1 extends along a main axis X1 placed in a substantially vertical direction when the wheel of the vehicle rests on a flat ground. Strut 1 comprises a damper piston including a piston body and a damper rod 2, a bumper 3, a suspension spring 4 and the strut bearing unit 10. Rod 2, bumper 3 and spring 4 are partially and schematically shown in figure 4, while the piston body is not shown, for simplification purposes.

Unit 10 has an overall a shape of revolution about axis X1. Unit 10 comprises a rolling bearing 20, a lower cup 30, an upper cup 40, a chamber 50, a seal 60 and two stiffening inserts 70 and 80 integrated within lower cup 30. Bearing 20 and seal 60 are positioned in chamber 50, which is delimited between cups 30 and 40. Unit 10 forms a compact assembly.

Bearing 20 is an angled-contact rolling bearing. Bearing 20 includes a bottom and outer race 21, a top and inner race 22, rolling elements 23 and a cage 24. Rolling elements 23 are balls placed in cage 24, in angled contact between the outer race 21 and the inner race 22. As an alternative example, rolling elements 23 may be rollers. Races 21 and 22 are preferably made of metal and formed by stamping. In this case, each of the races 21 and 22 forms a raceway for the rolling elements 23 within bearing 20. Bearing 20 forms an axial stop within unit 10, between cups 30 and 40. Thus, unit 10 forms an axial stop within strut 1. Bearing 20 allows, on the one hand, a relative pivoting between races 21 and 22 about the axis X1 and, on the other hand, an inclination of rod 2 relative to the body of the vehicle.

Lower cup 30 forms bearing means and support for bumper 3 and suspension spring 4. Lower cup 30 comprises a tubular axial portion 31, an annular outward radial portion 32 and an annular inward radial portion 33. Portion 32 extends from portion 31 opposite axis X1, while portion 33 extends from portion 31 toward X1. Portion 31 forms a guide for bumper 3 and spring 4, both axially and radially. Portion 32 forms an axial support for spring 4. Portion 33 forms an axial stop for limiting the upwards displacement of bumper 3. A rounded corner 34 is formed between axial portion 31 and radial portion 32. Several projections 35 extend from axial portion 31 toward axis X1. Projections 35 are distributed around axis X1, along the inner bore of portion 31.

Bumper 3 is positioned around rod 2 and axis X1. Bumper 3 has a collar 5 positioned between radial portion 33 and projections 35. In a resting configuration, collar 5 is positioned so as to rest on projections 35. Bumper 3 form a shock absorbing pad, preferably made of rubber or elastomer. Bumper 3 is elastically deformable according to the stresses exerted on the suspension system of the vehicle. When the suspension system is in service, bumper 3 exerts forces against lower cup 30, which transmits these forces within unit 10. More precisely, bumper 3 exerts upward axial forces against the annular inward radial portion 33 of lower cup 30 when said bumper 3 damps shocks or vibrations. When bumper 3 is contacting portion 33 and is still damping a shock, said bumper 3 is compressed and then is radially deformed. Then bumper 3 exerts outward radial forces against tubular axial portion 31.

Spring 4 is wound around rod 2 and axis X1. Spring 4 is placed so as to rest between lower cup 30 on the top side and the body of the damper piston on the bottom side. More precisely, spring 4 is positioned in the rounded corner 34 of lower cup 30. Spring 4 is elastically deformable according to the stresses exerted on the suspension system of the vehicle. When the suspension system is in service, spring 4 exerts upward axial forces against lower cup 30, which transmits these forces within unit 10.

Seal 60 comprises an outer part 61, an inner part 62 and a linking part 63. Part 61 has two sealing lips, while part 62 has one sealing lip. Part 63 extends between parts 61 and 62. Seal 60 can be made of thermoplastic material and be overmolded onto cup 30. Alternately, seal 60 can be made of elastomer material and be cured on cup 30.

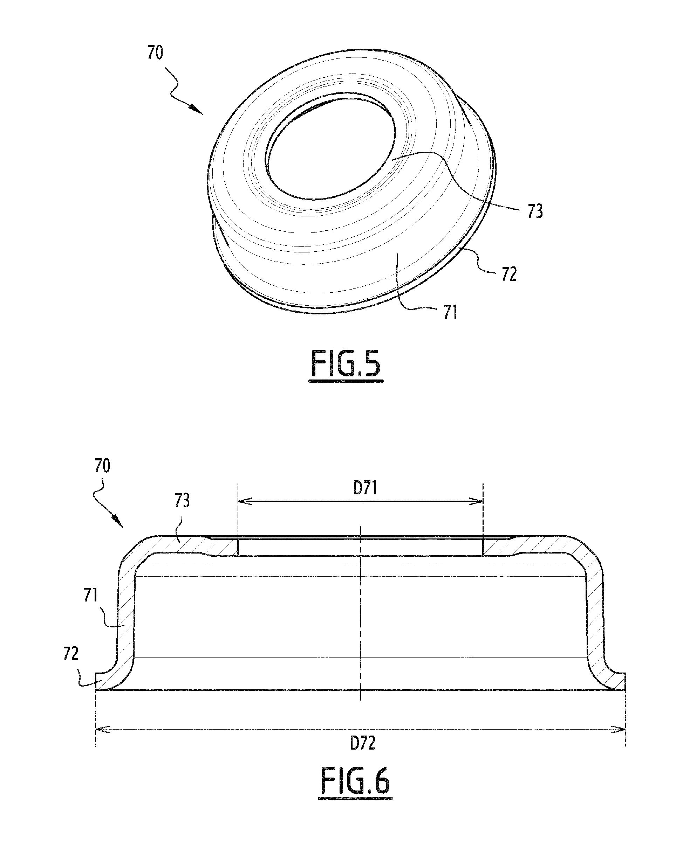

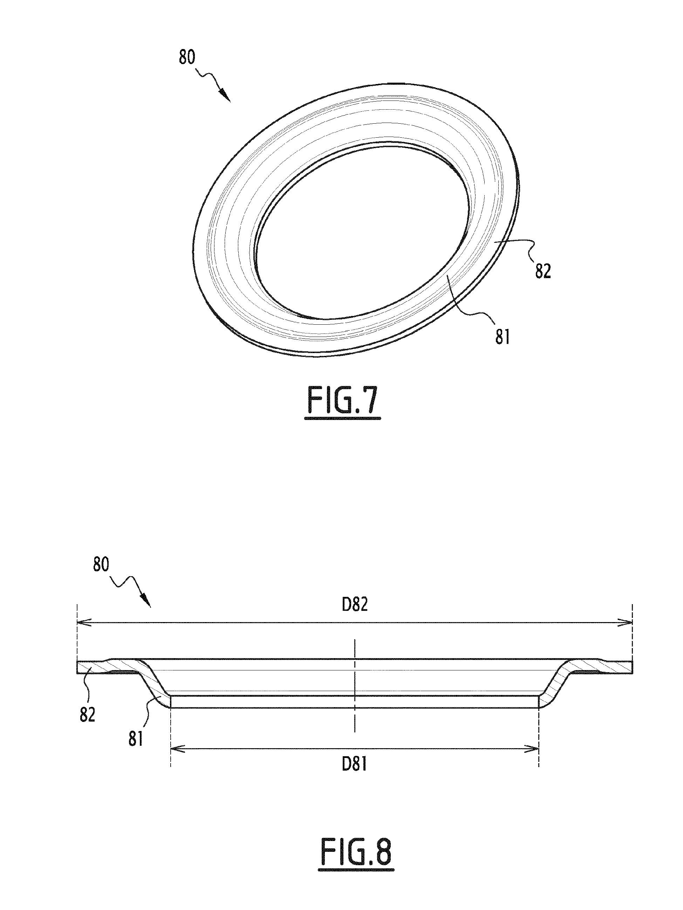

Figures 3 and 4 show both inserts 70 and 80, figures 5 and 6 show only insert 70, while figures 7 and 8 show only insert 80.

Insert 70 comprises a tubular axial portion 71, an outward radial portion 72 and an inward radial portion 73. Portion 72 extends opposite axis X1 from the bottom of portion 71, while portion 73 extends toward X1 from the top of portion 71. Portion 71 is located within portion 31 of lower cup 30. Insert 70 has an innermost diameter D71 delimited by portion 73 and an outermost diameter D72 delimited by portion 72.

Insert 80 comprises a frustoconical inner portion 81 and a radial outer portion 82. Portion 82 extends opposite axis X1 from the top of portion 81. Portion 81 extends within cup 30 between portions 31 and 32, near corner 34. Portion 82 is located within portion 32 of lower cup 30. Among the two inserts 70 and 80, only insert 80 extends within portion 32 of lower cup 30. Insert 80 has an innermost diameter D81 delimited by portion 81 and an outermost diameter D82 delimited by portion 82.

Thanks to the stiffening function performed by inserts 70 and 80, the lower cup 30 is well configured to resist to the radial and axial loads exerted by bumper 3 and spring 4 in three specific areas of the lower cup 30, submitted to the radial load coming from bumper 3, the axial load coming from bumper 3 and the axial load coming from spring 4. Inserts 70 and 80 can be made of metal, while lower cup 30 can be made of synthetic material. Inserts 70 and 80 are fully integrated within lower cup 30, preferably by overmoulding, which is a well-known process and consequently allows reduction of manufacturing costs. Except their innermost bores, inserts 70 and 80 are preferably devoid of through holes to avoid reducing their mechanical strength.

The invention also relates to a method for manufacturing the strut bearing unit 10. This method comprises successive steps a), b), c) and d). In step a), one unique metal sheet is stamped to form the different portions 71, 72, 73, 81 and 82, preferably in one unique stamping operation. In step b), the metal sheet is cut to get the two stiffening inserts 70 and 80. Thus, the outermost diameter D72 of the inner insert 70 is equal to the innermost diameter D81 of the outer insert 80. In step c), lower cup 30) is overmolded onto inserts 70 and 80, so that portion 71 is located within portion 31 and portion 82 is located within portion 31. In step d), unit 10 is assembled. More precisely, lower cup 30 is assembled with bearing 20, upper cup 40 and seal 60.

Thanks to the manufacturing method, one unique metal sheet is used for both inserts 70 and 80, by using the interior of the outer insert 80 to form the inner insert 70, thus providing savings of costs and materials.

Other non-shown embodiments can be implemented within the scope of the invention. By example, elements 20, 30, 40 or 60 may have different configurations. According to another example, unit 10 may comprise several bearings 20 located between cups 30 and 40. According to another example, unit 10 may be devoid of seal 60.

Whatever the embodiment, lower cup 30 includes two stiffening inserts 70 and 80 which are distinct from each other. Insert 70 comprises at least an axial portion 71 located within the axial portion 31 of lower cup 30, while insert 80 comprises at least a radial portion 82 located within the outward radial portion 32 of lower cup 30.

Thus, the two inserts 70 and 80 in combination stiffen two radial areas and one axial area, permitting weight savings in comparison with one unique insert stiffening the same areas.

In addition, technical features of the different embodiments can be, in whole or part, combined with each other. Thus, the strut bearing unit 10 can be adapted to the specific requirements of the application.

## Claims

1. A strut bearing unit (10), comprising a bearing (20), a lower cup (30) and an upper cup (40), the lower cup (30) comprising a tubular axial portion (31) and an annular outward radial portion (32), **characterized in that** the lower cup (30) includes two stiffening inserts (70, 80) which are distinct from each other, with a first insert (70) comprising at least an axial portion (71) located within the axial portion (31) of the lower cup (30), and a second insert (80) comprising at least a radial portion (82) located within the outward radial portion (32) of the lower cup (30).

2. Strut bearing unit (10) according to claim 1, wherein the outermost diameter (D72) of the first insert (70) is equal to the innermost diameter (D81) of the second insert (80).

3. Strut bearing unit (10) according to any one of the previous claims, wherein among the two stiffening inserts (70, 80), only the second insert (80) extends within the outward radial portion (32) of the lower cup (30).

4. Strut bearing unit (10) according to any one of the previous claims, wherein the lower cup (30) further comprises an inward radial portion (33) and wherein the first insert (70) comprises an axial portion (71) located within the axial portion (31) of the lower cup (30) and an inward radial portion (73) located within the inward radial portion (33) of the lower cup (30).

5. Strut bearing unit (10) according to any one of the previous claims, wherein the first insert (70) comprises an outward radial portion (72) located within the axial portion (71) of the lower cup (30).

6. Strut bearing unit (10) according to any one of the previous claims, wherein the second insert (82) comprises a frustoconical inner portion (81) extending between the outward radial portion (32) and the axial portion (31) of the lower cup (30).

7. Strut bearing unit (10) according to any one of the previous claims, wherein except their innermost bores, the two stiffening inserts (70, 80) are devoid of through holes.

8. Strut bearing unit (10) according to any one of the previous claims, wherein the two stiffening inserts (70, 80) are made of metal, while the lower cup (30) is made of synthetic material.

9. Strut bearing unit (10) according to any one of the previous claims, wherein the bearing (20) is a rolling bearing.

10. Strut bearing unit (10) according to any one of the previous claims, comprising several bearings (20) located between the lower cup (30) and the upper cup (40).

11. Strut bearing unit (10) according to any one of the previous claims, wherein the two stiffening inserts (70, 80) are manufactured from one unique stamped metal sheet.

12. Strut bearing unit (10) according to any one of the previous claims, wherein the two stiffening inserts (70, 80) are manufactured from two different stamped metal sheets.

13. A motor vehicle, equipped with a strut bearing unit (10) according to any one of the previous claims 1 to 12.

14. A method for manufacturing a strut bearing unit (10) according to claim 11, the method including the following successive steps:
a) a step of stamping one unique metal sheet to form at least one axial portion (71) and at least one radial portion (82) ;
b) a step of cutting the metal sheet to get the two stiffening inserts (70, 80), with the first insert (70) comprising at least the axial portion (71) and the second insert (80) comprising at least the radial portion (82) ;
c) a step of overmolding the lower cup (30) onto the two stiffening inserts (70, 80), with the axial portion (71) of the first insert (70) being located within the axial portion (31) of the lower cup (30) and the radial portion (82) of the second insert (80) being located within the outward radial portion (32) of the lower cup (30) ;
d) a step of assembling the strut bearing unit (10).

15. Method according to claim 14, wherein the step of stamping a) is performed in one unique stamping operation.
